# EUROPÄISCHE PATENTSCHRIFT

(11) **EP 2 406 087 B1**
(45) Veröffentlichungstag und Bekanntmachung des Hinweises auf die Patenterteilung: **03.04.2013**
(21) Anmeldenummer: 10726060.6
(22) Anmeldetag: 16.06.2010
(51) Int. Cl.: B60B 7/00, B60B 27/00

(54) **RADLAGERANORDNUNG MIT MITTENZENTRIERUNG**
WHEEL BEARING ASSEMBLY HAVING A CENTERING DEVICE
ENSEMBLE ROULEMENT DE ROUE À CENTRAGE PAR MOYEU

(30) Priorität: 22.06.2009 DE 102009027082
(43) Veröffentlichungstag der Anmeldung: 18.01.2012
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner
(86) Internationale Anmeldenummer: PCT/EP2010/058453
(87) Internationale Veröffentlichungsnummer: WO 2010/149552

(56) Entgegenhaltungen:
- EP-A2- 0 237 794
- DE-A1- 19 637 940
- DE-A1-102006 029 604
- GB-A- 2 192 959

## Beschreibung

Die vorliegende Erfindung bezieht sich auf eine Radnaben- bzw. Radlageranordnung mit Mittenzentrierung für Fahrzeuge, wie Nutzfahrzeuge oder Landfahrzeuge.

Radnaben- bzw. Radlageranordnungen der in Rede stehenden Art sind aus dem Stand der Technik bekannt. So offenbart beispielsweise die DE 100 49 615 A1 eine Radnaben- bzw. Radlageranordnung mit einer drehbar auf einem Achskörper gelagerten Radnabe. Zur Zentrierung des Rades weist die Radnabe hierbei einen Rücksprung auf. Problematisch bei derartigen Radnaben- bzw. Radlageranordnungen ist jedoch, dass aufgrund des Zentriervorsprungs in der Radnabe der geringste Durchmesser der zentralen Öffnung der Radfelge limitiert ist. Zur Behebung dieses Problems existieren Radnaben- bzw. Radlageranordnungen, die eine Mittenzentrierung aufweisen, die kleiner als der Innendurchmesser der Radnabe ist, indem vor die Lagereinheit eine topfförmige Bremsscheibe gesetzt wird, die einen entsprechenden Zentriersitz kleineren Durchmessers aufweist. Problematisch bei derartigen Systemen ist jedoch, dass die Radlagereinheit enormen thermischen Beanspruchungen ausgesetzt ist, da der Topf der topfförmigen Bremsscheibe die Radlagereinheit von der Außenkühlung abschirmt und darüber hinaus ein direkter Wärmeeintrag in die Radlagereinheit während des Bremsvorgangs erfolgen kann.

Die gattungsgemäße DE 10 2006 029 604 A1 betrifft ein Radlager für ein Kraftfahrzeug, welches einen, einen radialen Radflansch aufweisenden, Außenring und zumindest einen Innenring umfasst, zwischen denen Wälzkörper in Laufbahnen abrollbar angeordnet sind, und mit einem axialen Zentrierabschnitt, auf dem eine Radfelge sowie eine Bremsscheibe aufsteckbar sind.

Die DE 19 637 940 A1 betrifft eine Nabe für ein Antriebsrad mit einer axiale Ausnehmung für eine Schraube zur Befestigung einer treibenden Einrichtung an der Nabe.

Die EP 0 237 794 A2 betrifft eine Lagerungsanordnung mit einem einstückig hergestellten Lagerinnenring, welcher eine Sprengfuge aufweist, welche zwischen den beiden Laufbahnen des Lagerinnenrings angeordnet ist.

Es ist somit Aufgabe der vorliegenden Erfindung, eine Radnaben- bzw. Radlageranordnung mit Mittenzentrierung für Fahrzeuge, wie Nutzfahrzeuge oder Landfahrzeuge, vorzusehen, welche flexibel an die daran anzuordnen Radfelgen anpassbar ist, ohne einen negativen thermischen Einfluss auf die Radlagerung auszuüben.

Diese Aufgabe wird durch eine Radnaben- bzw. Radlageranordnung mit Mittenzentrierung für Fahrzeuge, wie Nutzfahrzeuge oder Landfahrzeuge, mit den Merkmalen des Anspruchs 1. gelöst. Bevorzugte Ausführungsformen ergeben sich aus den abhängigen Ansprüchen.

Erfindungsgemäß ist eine Radnaben- bzw. Radlageranordnung mit Mittenzentrierung für Fahrzeuge, wie Nutzfahrzeuge oder Landfahrzeuge, vorgesehen, umfassend eine Radnabe, welche um eine Rotationsachse drehbar an einem Achskörper anordenbar ist und an welcher ein Rad befestigbar ist, und eine Zentriereinheit, welche an der Radnabe festlegbar ist, wobei die Zentriereinheit einen Zentrierbereich aufweist, an welchem das Rad anordenbar ist, und wobei der Abstand des Zentrierbereichs zur Rotationsachse geringer als der Abstand des äußeren Umfangs der Radnabe zur Rotationsachse ist. Die Radnaben- bzw. Radlageranordnung dient somit insbesondere zur Lagerung eines Rads an einer Fahrzeugachse bzw. einem Achskörper eines Kraftfahrzeugs, insbesondere eines Landfahrzeugs. Dies sind insbesondere beispielsweise Sattelanhänger, welche von einem Lastkraftwagen gezogen werden, um schwere Lasten zu transportieren, oder Nutzfahrzeuge in Form von Lastkraftwagen selbst. Infolgedessen kann die Radnaben- bzw. Radlageranordnung als Nutzfahrzeugradlageranordnung ausgebildet sein. Der Achskörper ist im Wesentlichen starr bzw. nicht drehbar bzw. nicht rotierbar am Rahmen des Fahrzeugs angeordnet, sodass die Radnabe um eine Rotationsachse dreh- bzw. rotierbar am Achskörper angeordnet ist. Die Rotations- bzw. Drehachse entspricht hierbei im Wesentlichen der Längsachse des Achskörpers bzw. der Rotationsachse des Rades des Fahrzeugs. Das Rad des Fahrzeugs ist über die Radnabe drehbar an dem Achskörper angeordnet. Hierfür ist eine Zentriereinheit vorgesehen, um das Rad relativ zur Rotationsachse zu zentrieren bzw. dessen (radiale) Lage zur Rotationsachse festzulegen. Entsprechend weist die Zentriereinheit einen Zentrierbereich auf, an welchem das Rad anordenbar ist. Der Zentrierbereich ist hierbei derart gestaltet, dass er zumindest teilweise passend bzw. kongruent zu einer bestimmten geometrischen Konfiguration des Rades bzw. der Radfelge gestaltet ist. Dies ist insbesondere ein zentrales Loch bzw. eine zentrale Ausnehmung bzw. Rücksprung in dem Rad. Vorteilhafterweise ist der Abstand des Zentrierbereichs zur Rotationsachse geringer als der Abstand des äußeren Umfangs der Radnabe zur Rotationsachse. Bei einer kreisrunden Konfiguration des Zentrierbereichs ist somit dessen Durchmesser geringer als der Außendurchmesser der Radnabe. Die Zentriereinheit kann einteilig bzw. -stückig oder mehrteilig bzw. -stückig ausgebildet sein. Insbesondere ist die Zentriereinheit jedoch als von der Radnabe separates Element ausgebildet, wobei diese somit lösbar bzw. demontierbar und wieder montierbar an der Radnabe angeordnet ist. Hierdurch kann die Zentriereinheit im Schadenfall einfach ausgetauscht werden. Zweckmäßigerweise ist der Zentrierbereich an einer distalen bzw. nach außen ragenden Seite bzw. Fläche der Zentriereinheit vorgesehen. "Distal" bedeutet hierbei vom Zentrum der Achse weggerichtet, sodass der Zentrierbereich von außerhalb des Fahrzeugs sichtbar ist.

Vorteilhafterweise weist die Radnaben- bzw. Radlageranordnung weiterhin eine Lageranordnung auf, über welche die Radnabe um den Achskörper drehbar gelagert ist. Die Lageranordnung kann hierbei als Wälzlager- oder Gleitlageranordnung ausgebildet sein. Mittels der Lageranordnung wir gewährleistet, dass die Radnabe um die Rotationsachse bzw. Längsachse des Achskörpers dreh- bzw. rotierbar ist.

Zweckmäßigerweise weist die Lageranordnung einen inneren Lagerring auf, an welchem über zumindest einen Lagerkörper zumindest ein äußerer Lagerring drehbar angeordnet ist. Der innere Lagerring ist vorzugsweise fest am Achskörper angebunden bzw. axial festgelegt. Der äußere Lagerring hingegen ist an der Radnabe festgelegt. Der innere und/oder äußere Lagerring können einteilig oder mehrteilig ausgebildet sein. So kann der innere Lagerring zweiteilig durch einen distalen inneren Lagerring und einen proximalen inneren Lagerring ausgebildet sein, welche über einen radialen Klemmring miteinander verbunden sind. Die Lagerkörper können vorzugsweise als Wälzlagerkörper, wie Zylinder oder Kegelrollen ausgebildet sein. Um einen zuverlässigen Betrieb der Lageranordnung gewährleisten zu können, kann diese mittels Dichtelementen derart abgekapselt sein, dass Schmutz oder andere Partikel nicht in das Lager eindringen können.

Vorzugsweise ist der Abstand des Zentrierbereichs zur Rotationsachse geringer als der Abstand des äußeren Umfangs der Lageranordnung zur Rotationsachse. In anderen Worten ist der Abstand des Zentrierbereichs zur Rotationsachse geringer als der Radius des Außenumfangs der Lageranordnung, insbesondere des äußeren Lagerrings. Bei einer rotationssymmetrischen Ausbildung des Zentrierbereichs ist somit der Durchmesser desselben geringer als der Außendurchmesser des äußeren Lagerrings. Hierbei ist der Abstand des Zentrierbereichs zur Rotationsachse insbesondere mindestens um die Wandstärke der Zentriereinheit in diesem Bereich geringer als der Außenradius der Lageranordnung.

Bevorzugterweise ist der Zentrierbereich rotationssymmetrisch ausgebildet, wobei das Verhältnis des Durchmessers des Zentrierbereichs zum Außendurchmesser der Lageranordnung etwa 0,65-0,96, vorzugsweise etwa 0,85-0,94 und besonders vorzugsweise etwa 0,92 beträgt. Durch dieses optimale Verhältnis ist es möglich, eine besonders stabile Radfelge anzuordnen, ohne die Größe des Achskörpers, der Radnabe oder der Lageranordnung verändern oder verringern zu müssen, wodurch das System noch betriebssicherer wird.

In einer bevorzugten Ausführungsform ist die Zentriereinheit becherförmig ausgebildet und weist einen Bodenbereich und einen Umfangsbereich auf. In anderen Worten kann die Zentriereinheit im Wesentlichen zylinderförmig oder sich leicht verjüngend mit vorzugsweise einem geschlossenen Boden ausgebildet sein. Der Umfangsbereich erstreckt sich hierbei im Wesentlichen quer, vorzugsweise senkrecht vom Bodenbereich weg. Der Begriff "becherförmig" ist hierbei lediglich auf eine Grundkonfiguration der Zentriereinheit bezogen. Es versteht sich, dass die Zentriereinheit eine Vielzahl von weiteren angeformten Bereichen oder Abschnitten aufweisen kann, welche von der Becherform abweichen.

Zweckmäßigerweise ist der Zentrierbereich durch einen im Wesentlichen rotationssymmetrischen Außenumfang des Umfangsbereichs der Zentriereinheit ausgebildet. Der Zentrierbereich kann hierbei eine im Wesentlichen zylindrische Konfiguration aufweisen. Alternativ kann sich der Zentrierbereich zu einem distalen Ende hin bzw. nach außen hin verjüngen, sodass der Zentrierbereich im Wesentlichen durch die Oberfläche einer Kegelmantelfläche determiniert ist. Es versteht sich, dass der Zentrierbereich in umfänglicher Richtung nicht durchgehend sein muss, sondern auch als Abfolge von Kreisbogenabschnitten, welche den gleichen Abstand zur Rotationsachse aufweisen. Insbesondere ist der Zentrierbereich im Wesentlichen koaxial bzw. konzentrisch zur Rotationsachse ausgebildet.

Vorzugsweise steht der Umfangsbereich im montierten Zustand der Zentriereinheit derart mit einem distalen Endbereich der Lageranordnung, vorzugsweise des äußeren Lagerrings, in Eingriff, dass die Lageranordnung, vorzugsweise der äußere Lagerring, axial zur Radnabe festgelegt ist. In anderen Worten kann der proximal gerichtete Teil des Umfangsbereichs der Zentriereinheit mit einem distalen Ende der Lageranordnung in Eingriff gebracht werden, um eine axiale Verlagerung der Lageranordnung in distaler Richtung zu verhindern bzw. einzuschränken. Die Stirnseite des Umfangsbereichs kann daher mit der Stirnseite der Lageranordnung bzw. der Stirnseite des äußeren Lagerrings in Kontakt gebracht werden. Das proximale Ende der Lageranordnung bzw. des äußeren Lagerrings kann in einer bevorzugten Ausführungsform mit einem Flansch oder Vorsprung der Radnabe, welcher vorzugsweise radial ausgebildet ist, in Eingriff gebracht werden, sodass eine axiale Verlagerung der Lageranordnung in proximaler Richtung beschränkt wird.

Bevorzugterweise weist die Zentriereinheit weiterhin einen Flanschbereich auf, der sich vorzugsweise radial vom Umfangsbereich nach außen weg erstreckt. Der Flanschbereich kann sich quer vom Umfangsbereich weg erstrecken und erstreckt sich besonders vorteilhafterweise im Wesentlichen senkrecht vom Umfangsbereich weg. In anderen Worten steht der Flanschbereich im Wesentlichen senkrecht bzw. rechtwinklig zur Rotationsachse. Der Außendurchmesser des Flanschbereichs ist vorteilhafterweise kleiner oder gleich dem Außendurchmesser der Radnabe. Der Flanschbereich kann Löcher bzw. Ausnehmungen oder Durchbrüche aufweisen, welche von den zur Befestigung des Rads dienenden Radschrauben durchgriffen bzw. durchgeführt werden können, um mit der Radnabe in Eingriff zu gelangen. Ferner kann der Radflansch eines oder mehrere weiterer Löcher kleineren Durchmessers aufweisen, um ein Befestigungsmittel zur Fixierung der Zentriereinheit an der Radnabe anzuordnen. Hierdurch wird eine Montageerleichterung sowie Transport- und Verliersicherung der Zentriereinheit an der Radnabe ohne daran befestigtem Rad geschaffen.

Vorteilhafterweise weist der Bodenbereich der Zentriereinheit eine vorzugsweise zur Rotationsachse konzentrische Öffnung auf, die durch ein Verschlusselement verschließbar ist. Durch die Öffnung kann bei montierter Radnaben- bzw. Radlageranordnung ein Zugang zum Achskörper geschaffen werden, um beispielsweise Schmiermittel einzubringen. Die Öffnung kann auch lediglich als Rücksprung ausgebildet sein, in welcher ein entsprechender als Verschlusselement ausgebildeter Deckel anordenbar ist.

In einer bevorzugten Ausführungsform weist die Zentriereinheit Eingriffsmittel auf, die ausgelegt sind, mit der Radnabe in Eingriff zu gelangen, damit die Zentriereinheit leicht montiert und demontiert werden kann. Die Eingriffsmittel können beispielsweise als Außengewinde am Umfangsbereich der Zentriereinheit im Bereich des freien Endes hiervon ausgebildet sein, das ausgelegt ist, mit einem entsprechenden Innengewinde am Innenumfang der Radnabe in Eingriff zu gelangen. Zusätzlich oder alternativ kann am äußeren Umfangsbereich eine radiale Nut oder ein radialer Vorsprung ausgebildet sein, der mit einem am Innenumfang der Radnabe angeordneten radialen Vorsprung bzw. radialer Nut in Eingriff gelangt, um die Zentriereinheit an der Radnabe festzulegen. Zusätzlich oder alternativ können ebenfalls Schrauben, Bolzen, Nieten oder ähnliche Elemente vorgesehen sein, welche sich vorzugsweise durch Öffnungen im Flanschbereich der Zentriereinheit erstrecken und an der Radnabe befestigt werden. Durch die Eingriffsmittel kann ferner vorteilhafterweise eine Beschädigung der Bauteile der Radnabeneinheit aufgrund von thermischen Einflüssen bzw. einer partiellen Erhitzung vermieden werden, wie dies bei aus dem Stand der Technik bekannten Lösungen der Fall ist, bei welchen die Zentriereinheit stoffschlüssig und unlösbar (z. B. über Verschweißen oder Löten) an der Radnabe befestigt ist.

Weitere Vorteile und Merkmale der Erfindung ergeben sich aus der nachfolgenden Beschreibung beispielhafteter bevorzugter Ausführungsformen der erfindungsgemäßen Radlagerordnung mit Bezug auf die beigefügten Figuren, wobei einzelne Merkmale von verschiedenen Ausführungsformen zu neuen Ausführungsformen kombiniert werden können. Es zeigen:
- Fig. 1: eine Querschnittsansicht einer bevorzugten Ausführungsform der erfindungsgemäßen Radnaben- bzw. Radlageranordnung.
- Fig. 2: eine teilweise geschnittene perspektivische Ansicht der Radnaben- bzw. Radlageranordnung gemäß Fig. 1.
- Fig. 3: eine Querschnittsansicht einer weiteren bevorzugten Ausführungsform der erfindungsgemäßen Radnaben- bzw. Radlageranordnung.
- Fig. 4: eine teilweise geschnittene perspektivische Ansicht der Radnaben- bzw. Radlageranordnung gemäß Fig. 3.
- Fig. 5: eine Querschnittsansicht einer weiteren bevorzugten Ausführungsform der erfindungsgemäßen Radnaben- bzw. Radlageranordnung.
- Fig. 6: eine teilweise geschnittene perspektivische Ansicht der Radnaben- bzw. Radlageranordnung gemäß Fig. 5.

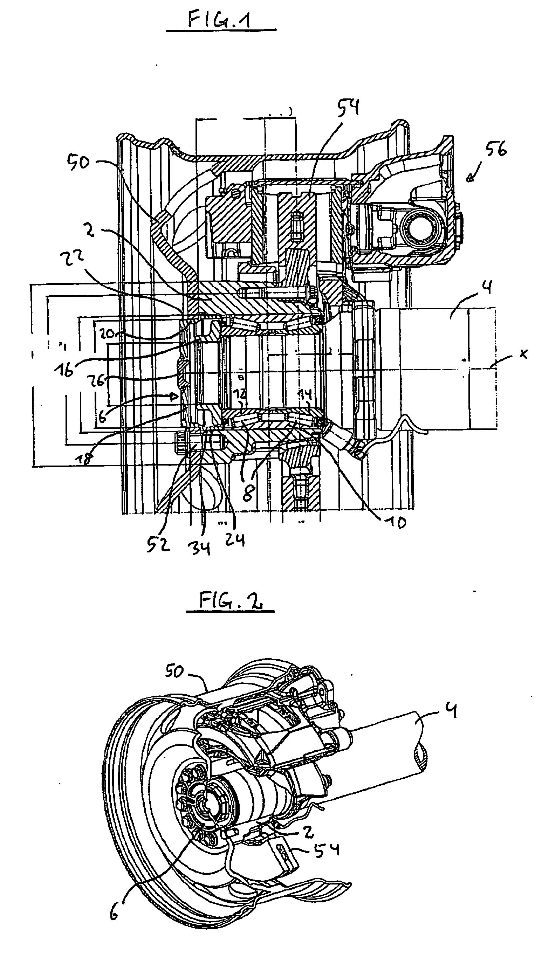

In den Figuren 1 und 2 ist eine erste, bevorzugte beispielhafte Ausführungsform einer erfindungsgemäßen Radnaben- bzw. Radlageranordnung dargestellt, welche eine Mittenzentrierung für daran anzubringende Räder aufweist. Die Radnaben- bzw. Radlageranordnung umfasst eine Radnabe 2, welche um eine Rotationsachse x drehbar an einem Achskörper 4 angeordnet ist. Um die Radfelge 50 eines Rades an der Radnaben- bzw. Radlageranordnung zu befestigen, weist diese zusätzlich eine Zentriereinheit 6 auf, welche an der Radnabe 2 befestigt ist.

Der Achskörper 4 ist im Wesentlichen nicht rotierbar bzw. nicht drehbar mit dem Rahmen des Fahrzeugs verbunden. Auf dem Achskörper 4 ist eine Lageranordnung vorgesehen, die aus einer inneren Lagerringeinheit, einer Vielzahl von Lagerkörpern 8 und einem äußeren Lagerring 10 besteht. Die innere Lagerringeinheit besteht hierbei aus einem distalen inneren Lagerring 12 und einem proximalen inneren Lagerring 14, welche über einen radialen Klemmring miteinander befestigt sind. Über eine Achsmutter 16 wird der innere Lagerring 12, 14 axial am Achskörper 4 festgelegt und daran befestigt. Der äußere Lagerring 10 ist mit der Radnabe 2 verbunden.

An der Radnabe 2 ist die Radfelge 50 über Radschrauben 52 befestigt. An einem proximalen Bereich der Radnabe 2 ist ferner eine Bremsscheibe 54 angeordnet, die über eine am Rahmen des Fahrzeugs bzw. an dem Achskörper 4 befestigte Bremseinheit 56 betätigt werden kann.

Um die Radfelge 50 in Bezug auf die Radnabe 2 bzw. die Rotationsachse x zu zentrieren, ist die Zentriereinheit 6 an der Radnabe 2 angeordnet. Die Zentriereinheit 6 ist im Wesentlich becher- bzw. topfförmig ausgebildet und weist einen Bodenbereich 18 und einen Umfangsbereich 20 auf. Der Umfangsbereich 20 ist in der dargestellten Ausführungsform als im Wesentlichen gestufter Zylinder ausgebildet und weist an einer umfänglichen Außenfläche einen Zentrierbereich 22 auf, auf welchem die Radfelge 50 aufgeschoben und in Bezug auf die Rotationsachse x mitten-zentriert wird. Die Zentriereinheit 6 weist an der äußeren Umfangsfläche des Umfangsbereichs 20 Eingriffsmittel 24 in Form eines Gewindes auf, um mit einem entsprechenden Innengewinde der Radnabe 2 verschraubt zu werden. Hierdurch ist es möglich, dass die Stirnseite des Umfangsbereichs 20 mit der Stirnseite des äußeren Lagerrings 10 in Eingriff gelangt und diesen somit mit der Radnabe 2 verspannt und daran sicher festlegt.

Um einen Zugang zum Achskörper 4 und der Achsmutter 16 zu gewährleisten, weist der Bodenbereich 18 der Zentriereinheit 6 eine zweckmäßigerweise konzentrische Öffnung auf, die durch ein Verschlusselement 26 verschlossen ist.

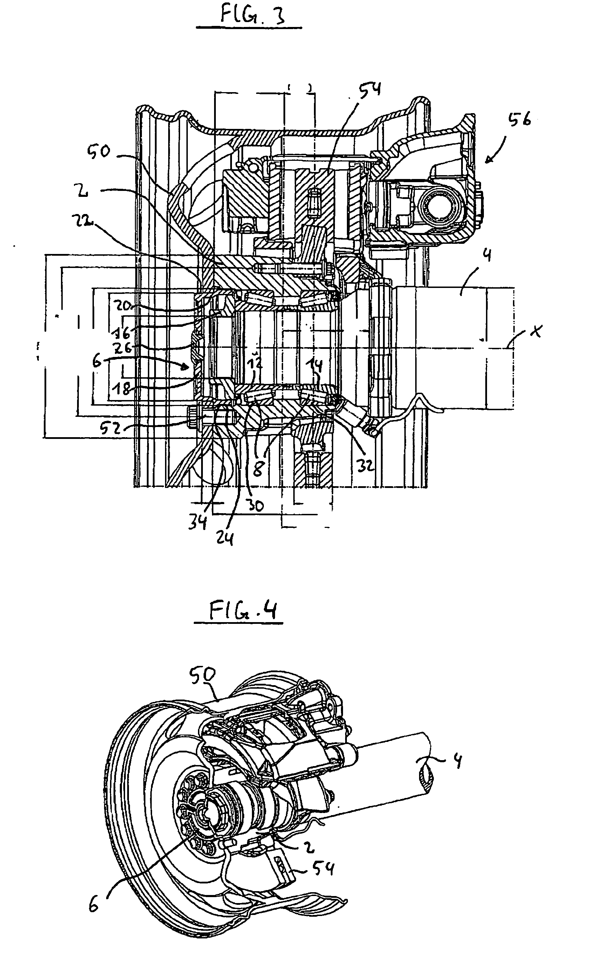

In den Figuren 3 und 4 ist eine alternative, bevorzugte beispielhafte Ausführungsform der erfindungsgemäßen Radnaben- bzw. Radlageranordnung dargestellt, wobei bei den zur Ausführungsform der Figuren 1 und 2 gleichen oder ähnlichen Elementen die gleichen Bezugszeichen verwendet werden.

Im Unterschied zu der in den Figuren 1 und 2 dargestellten Ausführungsform weist die Lageranordnung der in den Figuren 3 und 4 dargestellten Ausführungsform einen mehrteiligen äußeren Lagerring auf, welcher aus einem distalen äußeren Lagerring 30 und einem proximalen äußeren Lagerring 32 ausgebildet ist, welche sich jeweils an einer Schulter bzw. einem nach innen ragenden radialen Vorsprung der Radnabe 2 abstützen.

Besonders bevorzugt kann zwischen einem Vorsprung der Zentriereinheit 6 und der Radnabe 2 ein Dichtungselement 34 vorgesehen sein, um einen Eintritt von Flüssigkeiten von außen in den zwischen Achskörper 4, Achsmutter 16 und Zentriereinheit 6 aufgesparten Raum zu verhindern.

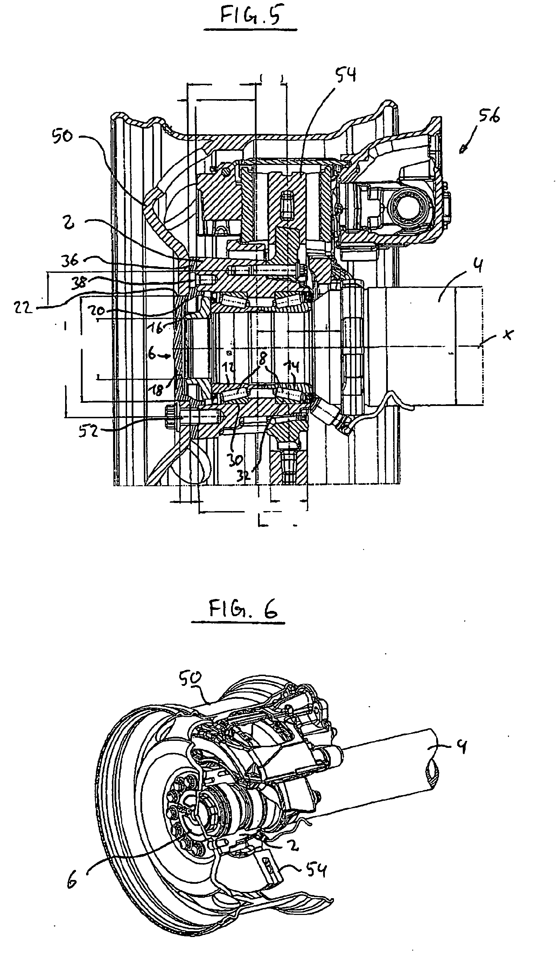

In Figuren 5 und 6 ist eine weitere, bevorzugte beispielhafte Ausführungsform der erfindungsgemäßen Radnaben- bzw. Radlageranordnung gezeigt, wobei bei den zur Ausführungsform der Figuren 1 bis 4 gleichen oder ähnlichen Elementen die gleichen Bezugszeichen verwendet werden.

Im Unterschied zu den in den Figuren 1-4 dargestellten Ausführungsformen weist die in den Figuren 5 und 6 dargestellte Ausführungsform der Radnaben- bzw. Radlageranordnung eine Zentriereinheit 6 auf, die einen Flanschbereich 36 aufweist, der sich radial vom Umfangsbereich 20 nach außen im Wesentlichen rechtwinklig zur Rotationsachse x wegerstreckt.

Im Flanschbereich 36 ist umfänglich eine Vielzahl von Öffnungen vorgesehen. In einer besonders bevorzugten Ausführungsform weisen die Öffnungen des Flanschbereichs 36 zwei verschiedene Konfigurationen auf. So sind einerseits Öffnungen vorgesehen, welche von der Radschraube 52 zur Befestigung der Radfelge 50 an der Radnabe 2 durchgriffen werden. Andererseits sind Öffnungen vorgesehen, in welche Befestigungsmittel 38, die beispielsweise als Schrauben oder ähnliches ausgebildet sein können, eingreifen und die Zentriereinheit 6 an der Radnabe 2 festlegen.

### Bezugszeichenliste

- 2: Radnabe
- 4: Achskörper
- 6: Zentriereinheit
- 8: Lagerkörper
- 10: äußerer Lagerring
- 12: distaler innerer Lagerring
- 14: proximaler innerer Lagerring
- 16: Achsmutter
- 18: Bodenbereich
- 20: Umfangsbereich
- 22: Zentrierbereich
- 24: Eingriffsmittel
- 26: Verschlusselement
- 30: distaler äußerer Lagerring
- 32: proximaler äußerer Lagerring
- 34: Dichtungselement
- 36: Flanschbereich
- 38: Befestigungsmittel
- 50: Radfelge
- 52: Radschraube
- 54: Bremsscheibe
- 56: Bremseinheit
- x: Rotationsachse

## Patentansprüche

1. Radnaben- bzw. Radlageranordnung mit Mittenzentrierung für Fahrzeuge, wie Nutzfahrzeuge oder Landfahrzeuge, umfassend
eine Radnabe (2), welche um eine Rotationsachse (x) drehbar an einem Achskörper (4) anordenbar ist und an welcher ein Rad befestigbar ist,
eine Zentriereinheit (6), welche an der Radnabe (2) festlegbar ist, und
eine Lageranordnung, über welche die Radnabe (2) um den Achskörper (4) drehbar gelagert ist,
**dadurch gekennzeichnet, dass**
die Lageranordnung einen inneren Lagerring (12, 14) aufweist, an welchem über zumindest einen Lagerkörper (8) zumindest ein äußerer Lagerring (10), der einen äußeren Umfang aufweist, drehbar angeordnet ist,
die Zentriereinheit (6) einen Zentrierbereich (22) aufweist, an welchem das Rad anordenbar ist,
der Abstand des Zentrierbereichs (22) zur Rotationsachse (x) geringer als der Abstand des äußeren Umfangs der Radnabe (2) zur Rotationsachse (x) ist,
der Abstand des Zentrierbereichs (22) zur Rotationsachse (x) geringer als der Abstand des äußeren Umfangs des äußeren Lagerrings (10) der Lageranordnung zur Rotationsachse (x) ist, und
die Zentriereinheit (6) Befestigungs- bzw. Eingriffsmittel (24; 38), wie ein Gewinde, Schrauben, Bolzen oder Nieten, aufweist, die ausgelegt sind, mit der Radnabe (2) in Eingriff zu gelangen, um die Zentriereinheit (6) an der Radnabe (2) montier- und demontierbar zu fixieren.

2. Radnaben- bzw. Radlageranordnung nach Anspruch 1, wobei der Zentrierbereich (22) rotationssymmetrisch ausgebildet ist und wobei das Verhältnis Durchmesser Zentrierbereich (22) zu Außendurchmesser der Lageranordnung etwa 0,65 - 0,96, vorzugsweise etwa 0,85 - 0,94, und besonders vorzugsweise etwa 0,92 beträgt.

3. Radnaben- bzw. Radlageranordnung nach einem der vorhergehenden Ansprüche, wobei die Zentriereinheit (6) becherförmig ausgebildet ist und einen Bodenbereich (18) und einen Umfangsbereich (20) aufweist.

4. Radnaben- bzw. Radlageranordnung nach Anspruch3, wobei der Zentrierbereich (22) durch einen im Wesentlichen rotationssymmetrischen Außenumfang des Umfangsbereichs (20) ausgebildet ist.

5. Radnaben- bzw. Radlageranordnung nach einem der Ansprüche 3 oder 4, wobei der Umfangsbereich (20) im montierten Zustand der Zentriereinheit (6) derart mit einem distalen Endbereich der Lageranordnung, vorzugsweise des äußeren Lagerrings (10), in Eingriff steht, dass die Lageranordnung, vorzugsweise der äußere Lagerring (10), axial zur Radnabe (2) festgelegt ist.

6. Radnaben- bzw. Radlageranordnung nach einem der Ansprüche 3 - 5, wobei die Zentriereinheit (6) weiterhin einen Flanschbereich (36) aufweist, der sich vorzugsweise radial vom Umfangsbereich (20) nach,außen weg erstreckt.

7. Radnaben- bzw. Radlageranordnung nach einem der Ansprüche 3 - 6, wobei der Bodenbereich (18) der Zentriereinheit (6) eine vorzugsweise zur Rotationsachse (x) konzentrische Öffnung aufweist, die durch ein Verschlusselement (26) verschließbar ist.

## Claims

1. A wheel hub or wheel bearing assembly with a centering device for vehicles, such as commercial vehicles or farm vehicles, comprising a wheel hub (2) which can be arranged rotatably on an axle body (4) about an axis of rotation (x) and to which a wheel can be fastened,
a centering unit (6) which can be fixed to the wheel hub (2), and
a bearing assembly by means of which the wheel hub (2) is rotatably supported around the axle body (4),
**characterized in that**
the bearing assembly comprises an inner bearing ring (12, 14) on which, via at least one bearing body (8), at least one outer bearing ring (10), which comprises an outer periphery, is rotatably arranged,
the centering unit (6) comprises a centering portion (22) on which the wheel can be arranged,
the distance of the centering portion (22) to the axis of rotation (x) is smaller than the distance of the outer periphery of the wheel hub (2) to the axis of rotation (x), the distance of the centering portion (22) to the axis of rotation (x) is smaller than the distance of the outer periphery of the outer bearing ring (10) of the bearing assembly to the axis of rotation (x), and
the centering unit (6) comprises fastening or engaging means (24; 38), such as a thread, screws/bolts, studs or rivets which are designed to come into engagement with the wheel hub (2) in order to fix the centering unit (6) on the wheel hub (2) in such a way that it can be assembled and disassembled.

2. The wheel hub or wheel bearing assembly according to claim 1, wherein the centering portion (22) is designed rotationally symmetric, and wherein the relationship of the diameter of the centering portion (22) to the outer diameter of the bearing assembly is about 0.65 - 0.96, preferably about 0.85 - 0.94, and particularly preferably about 0.92.

3. The wheel hub or wheel bearing assembly according to any one of the preceding claims, wherein the centering unit (6) is designed in the form of a cup and comprises a floor portion (18) and a circumferential portion (20).

4. The wheel hub or wheel bearing assembly according to claim 3, wherein the centering portion (22) is formed by an essentially rotationally symmetric outer circumference of the circumferential portion (20).

5. The wheel hub or wheel bearing assembly according to any one of claims 3 or 4, wherein the circumferential portion (20) in the assembled state of the centering unit (6) engages with a distal end portion of the bearing assembly, preferably of the outer bearing ring (10), such that the bearing assembly, preferably the outer bearing ring (10), is axially fixed relative to the wheel hub (2).

6. The wheel hub or wheel bearing assembly according to any one of claims 3-5, wherein the centering unit (6) further comprises a flange portion (36) which preferably extends outwards, radially away from the circumferential portion (20).

7. The wheel hub or wheel bearing assembly according to any one of claims 3-6, wherein the floor portion (18) of the centering unit (6) comprises an opening preferably concentric to the axis of rotation (x), which opening can be closed by means of a closure element (26).

## Revendications

1. Agencement formant moyeu ou palier de roue avec centrage médian pour véhicules automobiles, comme des véhicules utilitaires ou des véhicules terrestres, comprenant
un moyeu de roue (2), susceptible d'être agencé sur un corps d'essieu (4) en rotation autour d'un axe de rotation (x) et sur lequel une roue peut être fixée, une unité de centrage (6), qui peut être immobilisée sur le moyeu de roue (2), et un agencement formant palier au moyen duquel le moyeu de roue (2) est monté en rotation autour du corps d'essieu (4),
**caractérisé en ce que**
l'agencement formant palier comprend une bague de palier intérieure (12, 14), sur laquelle au moins une bague de palier extérieure (10), qui présente une périphérie extérieure, est agencée en rotation via au moins un corps de palier (8),
l'unité de centrage (6) comporte une zone de centrage (22) sur laquelle la roue peut être agencée,
la distance de la zone de centrage (22) à l'axe de rotation (x) est plus faible que la distance de la périphérie extérieure du moyeu de roue (2) à l'axe de rotation (x),
la distance de la zone de centrage (22) à l'axe de rotation (x) est plus faible que la distance de la périphérie extérieure de la bague de palier extérieure (10) de l'agencement formant palier à l'axe de rotation (x), et
l'unité de centrage (6) comprend des moyens de fixation ou d'engagement (24 ; 38), comme un pas de vis, des vis, des boulons ou des rivets, qui sont conçus pour venir en engagement avec le moyeu de roue (2) afin de fixer l'unité de centrage (6) sur le moyeu de roue (2) de manière à pouvoir être montée et démontée.

2. Agencement formant moyeu ou palier de roue selon la revendication 1, dans lequel la zone de centrage (22) est réalisée à symétrie de révolution, et dans lequel le rapport du diamètre de la zone de centrage (22) sur le diamètre extérieur de l'agencement formant palier est d'environ 0,65 à 0,96, de préférence environ 0,85 à 0,94, et de manière particulièrement préférée environ 0,92.

3. Agencement formant moyeu ou palier de roue selon l'une des revendications précédentes, dans lequel l'unité de centrage (6) est réalisée en forme de godet et présente une zone de fond (18) et une zone périphérique (20).

4. Agencement formant moyeu ou palier de roue selon la revendication 3, dans lequel la zone de centrage (22) est réalisée par une périphérie extérieure, sensiblement à symétrie de révolution, de la zone périphérique (20).

5. Agencement formant moyeu ou palier de roue selon l'une des revendications 3 ou 4, dans lequel la zone périphérique (20) est en engagement, dans l'état monté de l'unité de centrage (6), avec une zone d'extrémité distale de l'agencement formant palier, de préférence de la bague de palier extérieure (10), de telle façon que l'agencement formant palier, de préférence la bague de palier extérieure (10) est immobilisé axialement par rapport au moyeu de roue (2).

6. Agencement formant moyeu ou palier de roue selon l'une des revendications 3 à 5, dans lequel l'unité de centrage (6) comporte en outre une zone en forme de bride (36) qui s'étend vers l'extérieur de préférence en s'éloignant radialement depuis la zone périphérique (20).

7. Agencement formant moyeu ou palier de roue selon l'une des revendications 3 à 6, dans lequel la zone de fond (18) de l'unité de centrage (6) présente une ouverture de préférence concentrique à l'axe de rotation (x), qui peut être refermée par un élément de fermeture (26).
